Europäisches Patentamt

(19) European Patent Office

Office européen des brevets

(11) Numéro de publication : **0 187 061**
**B1**

(12) **FASCICULE DE BREVET EUROPÉEN**

(45) Date de publication du fascicule du brevet :
15.03.89

(21) Numéro de dépôt : **85402234.0**

(22) Date de dépôt : **19.11.85**

(51) Int. Cl.⁴ : **F 16 G   3/02**

(54) **Dispositif destiné à assurer la liaison articulée de deux séries complémentaires d'agrafes de jonction.**

(30) Priorité : **11.12.84 FR 8418870**

(43) Date de publication de la demande :
**09.07.86 Bulletin 86/28**

(45) Mention de la délivrance du brevet :
**15.03.89 Bulletin 89/11**

(84) Etats contractants désignés :
**BE DE GB IT**

(56) Documents cités :
**BE--A--   368 962**
**DE--C--   805 144**
**DE--C--   926 645**
**FR--A--   720 857**
**FR--A-- 2 196 683**
**FR--A-- 2 301 738**
**FR--A-- 2 380 471**
**GB--A--   128 169**
**US--A-- 2 962 782**

(73) Titulaire : **GORO S.A.**
**Avenue de Sylvie**
**F-77500 Chelles (FR)**

(72) Inventeur : **Schick, Jean-François**
**75, rue de l'Assomption**
**F-75016 Paris (FR)**

(74) Mandataire : **Tony-Durand, Serge**
**Cabinet Tony-Durand 77, rue Boissière**
**F-75116 Paris (FR)**

## Description

La présente invention concerne les dispositifs utilisés pour assurer la jonction de deux parties successives d'un tapis transporteur.

Une telle jonction est habituellement réalisée en rapportant, sur l'extrémité des deux parties à raccorder, deux séries complémentaires d'agrafes métalliques de jonction et en réunissant ensuite celles-ci au moyen d'un axe enfilé à travers l'ensemble des charnons imbriqués de ces agrafes. En général cet axe est constitué par un câble formé de fils métalliques torsadés de façon que celui-ci soit flexible dans le sens transversal. En effet ceci est indispensable pour que le tapis transporteur correspondant puisse, en cours de service, s'incurver dans le sens transversal afin de prendre une forme d'auge sur les rouleaux qui lui servent de supports.

Au cours des dernières années un certain nombre de solutions ont été imaginées pour renforcer la résistance mécanique des agrafes de jonction du type en cause et de leurs charnons d'articulation. Toutefois il n'a pas été possible jusqu'ici de réaliser un renforcement similaire des axes de liaison de ces agrafes et ce, du fait même que ceux-ci doivent posséder une flexibilité convenable dans le sens transversal. En conséquence ces axes constituent le point faible des dispositifs de jonction du type en cause.

Pour remédier à certains des défauts des axes de liaison de ces dispositifs, un certain nombre de solutions ont déjà été proposées. Ainsi le brevet allemand n° 805.144 concerne un axe de ce genre sur lequel sont soudées des douilles métalliques disposées à des intervalles déterminés. Ces douilles permettent de tronçonner un tel axe en un point intermédiaire sans que les fils métalliques se séparent les uns des autres. Mais cette solution n'assure aucun renforcement réel de la résistance mécanique de l'axe correspondant.

Le brevet allemand n° 926.645 décrit un axe du type en cause sur lequel sont enfilées une série de douilles métalliques disposées les unes à la suite des autres. La présence de ces douilles protège l'axe d'un contact direct avec les charnons des éléments de jonction et ce, tout en conservant une certaine flexibilité de cet axe pour permettre l'incurvement du tapis transporteur. Toutefois cette solution n'assure pas réellement un renforcement de la résistance mécanique de l'axe correspondant.

Le brevet U.S. n° 2.962.782 et le brevet français n° 720.857 décrivent des axes du type en cause qui comportent une gaine externe de protection en matière flexible. Là encore, il s'agit d'une solution destinée à assurer la protection de l'axe correspondant, mais non pas le renforcement de sa résistance mécanique.

Il en est de même dans le cas des axes décrits dans le brevet allemand n° 2.240.013 et 2.507.474 (FR-A-2196683 et FR-A-2301738). En effet, il s'agit là encore d'axes du type en cause sur lesquels sont enfilées des douilles métalliques de protection, de même que dans le brevet allemand n° 926.645.

C'est pourquoi la présente invention a pour but de réaliser un dispositif de liaison articulé destiné à remplacer les axes du type rappelé précédemment, et qui est conçu de façon à posséder une résistance mécanique considérablement accrue par rapport à de tels axes tout en comportant la flexibilité voulue.

A cet effet le dispositif selon l'invention est caractérisé en ce que :

— il est constitué par une série d'éléments indépendants en forme générale de tronçons de tige de section circulaire, disposés les uns à la suite des autres, et dont chacun présente une longueur limitée correspondant au maximum à celle des charnons de deux agrafes de fonction situées en regard,

— ces éléments comportent des parties décalées correspondant chacune à la largeur d'un charnon, de façon que ces éléments soient ainsi immobilisés dans le sens longitudinal après leur mise en place,

— et ces divers éléments sont initialement réunis les uns avec les autres par un moyen de liaison flexible, mais provisoire, susceptible de se rompre lors de l'incurvement ultérieur du tapis transporteur correspondant.

Ainsi ce moyen de liaison est amené à disparaître très rapidement dès la mise en service de ce tapis transporteur. Dans ces conditions les éléments constitutifs du présent dispositif sont complètement indépendants les uns des autres, ce qui permet la liberté voulue d'incurvement du tapis transporteur, du fait de la disposition des rouleaux servant de supports à celui-ci. Cependant comme chacun de ces éléments est de longueur limitée, ceux-ci peuvent être réalisés sous forme d'éléments rigides ayant une résistance mécanique considérablement accrue par rapport aux axes flexibles utilisés jusqu'ici.

Le moyen provisoire de liaison des différents éléments du présent dispositif peut être constitué par un jonc longitudinal engagé dans des rainures prévues à cet effet, sur la périphérie de ces éléments. Cependant, ce moyen de liaison provisoire peut également consister en un fil de très faible section et de faible résistance sur lequel les éléments du présent dispositif sont enfilés. Ce moyen de liaison peut également être constitué par une gaine à l'intérieur de laquelle ces éléments sont logés.

Cependant d'autres particularités et avantages du dispositif selon l'invention apparaîtront au cours de la description suivante. Celle-ci est donnée en référence au dessin annexé à simple titre indicatif, et sur lequel :

La figure 1 est une vue partielle en perspective d'une première forme de réalisation du dispositif de liaison selon l'invention.

Les figures 2 et 3 sont des vues en coupe selon deux plans décalés II-II et III-III de la figure 1.

La figure 4 est une vue partielle en plan de dessus d'une jonction de tapis transporteur, réalisée au moyen d'un tel dispositif de liaison.

La figure 5 en est une vue en coupe selon la ligne V-V de la figure 4.

La figure 6 est une vue partielle en coupe selon la ligne VI-VI de la figure 5.

Les figures 7 et 8 sont des vues similaires correspondant à des variantes de réalisation.

Les figures 9, 10 et 11 sont des vues partielles en perspective de trois autres formes de réalisation du dispositif selon l'invention.

La figure 12 est une vue schématique en coupe transversale d'un tapis transporteur comportant une jonction réalisée au moyen du présent dispositif de liaison, ce tapis étant représenté en position d'utilisation.

La figure 13 est une vue similaire correspondant à une autre forme de réalisation du dispositif de liaison selon l'invention.

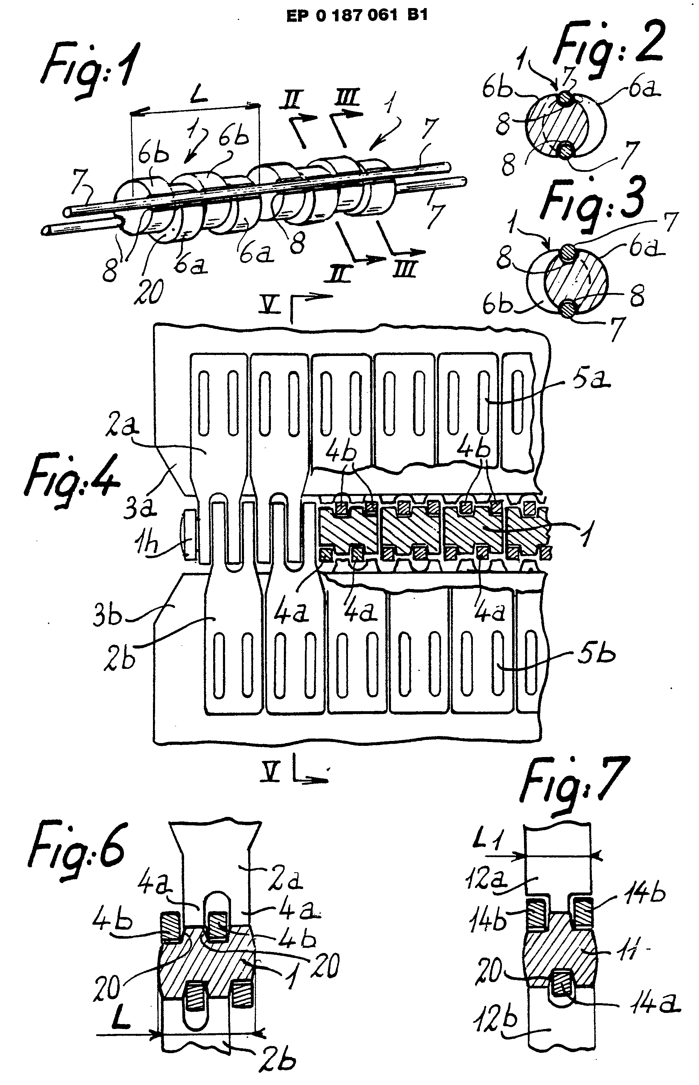

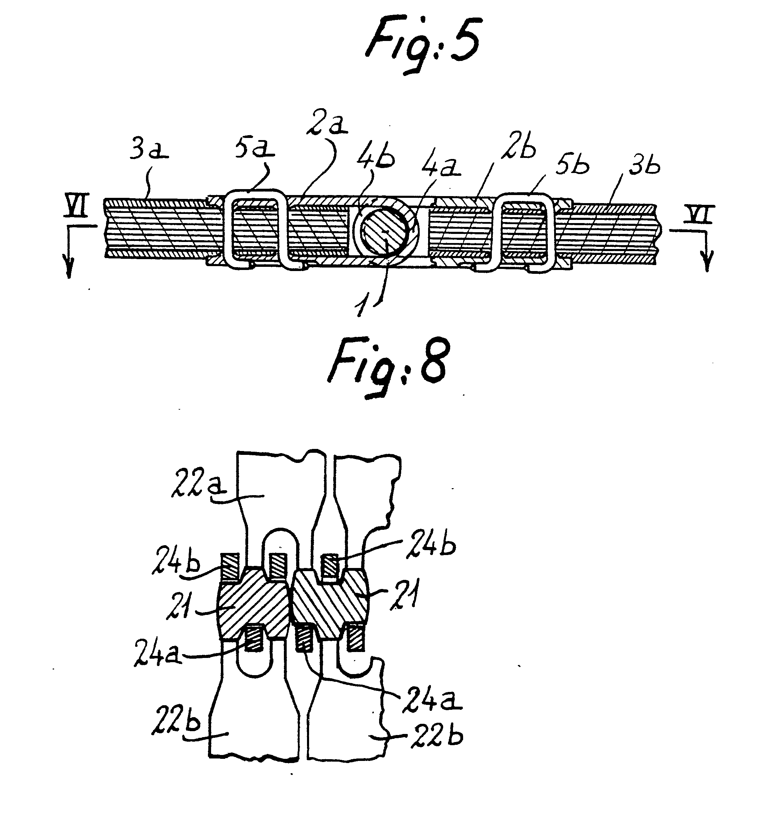

Dans l'exemple représenté aux figures 1 à 6, le dispositif de liaison selon l'invention est constitué par une série d'éléments indépendants 1 en forme générale de tronçons de tige de section circulaire, qui sont disposés les uns à la suite des autres. Ces éléments sont réalisés en un matériau de forte résistance mécanique, par exemple en acier ou tout autre métal approprié. Leur fabrication est effectuée par découpage et estampage d'un profilé de section correspondante. En conséquence, il s'agit d'éléments massifs et rigides.

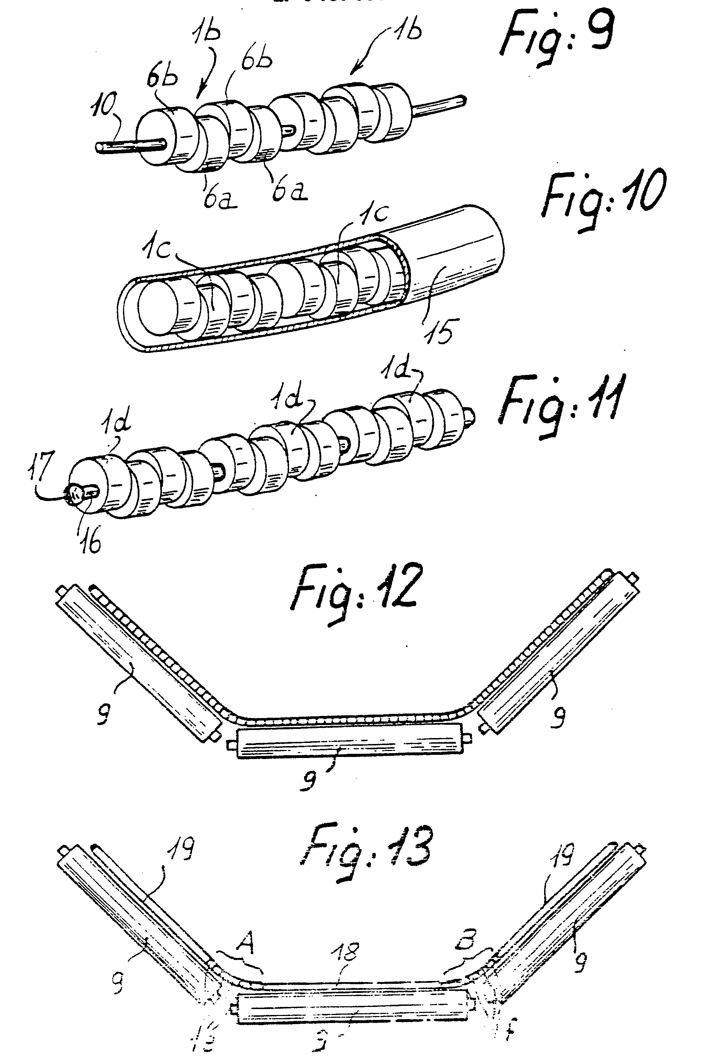

Ces éléments sont destinés à remplacer l'axe de liaison qui est habituellement utilisé pour réunir deux séries complémentaires d'agrafes de jonction 2a et 2b rapportées au préalable sur les bords des deux parties à raccorder 3a et 3b d'un tapis transporteur. En conséquence, l'ensemble formé par ces éléments est destiné à être enfilé dans le conduit transversal formé par les différents charnons 4a et 4b de ces agrafes lorsque ceux-ci sont imbriqués comme représenté à la figure 4. De la façon habituelle, les agrafes de jonction 2a et 2b peuvent être fixées, sur les deux parties 3a et 3b du tapis transporteur, par des crampons 5a et 5b en fils métalliques, ou par tous autres organes appropriés, par exemple des rivets. Cependant les agrafes de chaque rangée sont indépendantes les unes des autres ou bien reliées initialement les unes aux autres par un élément flexible susceptible de se rompre en cours d'utilisation du tapis transporteur correspondant.

La longueur L de chacun des éléments 1 du présent dispositif est très limitée. Ainsi comme représenté à la figure 6, cette longueur L est au maximum égale au total de l'espace occupé, dans le sens transversal, par les deux charnons 4a de l'agrafe de jonction 2a et les charnons 4b de l'agrafe 2b, qui se trouve située en regard de celle-ci. Cette longueur L correspond donc au total de la largeur de ces quatre charnons et de l'importance des jeux prévus entre ceux-ci.

En effet, chacun de ces éléments 1 est destiné à assurer uniquement la liaison articulée de deux agrafes 2a et 2b situées en regard l'une de l'autre. Ceci a pour but de laisser les agrafes de chaque rangée indépendantes les unes des autres.

Chacun des éléments 1 du présent dispositif comporte des parties décalées dont la largeur correspond à celle des différents charnons respectifs 4a et 4b. Ainsi dans l'exemple illustré dans les figures 1 à 6, chaque élément 1 comprend quatre parties distinctes, décalées les unes par rapport aux autres, à savoir : deux parties 6a décalées par rapport à deux autres parties 6b. Les parties 6a sont destinées à se trouver placées à l'intérieur des charnons 4a d'une agrafe de jonction 2a, cependant que les parties 6b sont disposées à l'intérieur des charnons 4b de l'agrafe 2b située en regard. Lorsque le tapis transporteur est mis sous tension, en état de service, les agrafes 2a et 2b des deux rangées prennent les positions respectives représentées à la figure 6, de sorte que les éléments de jonction 1 se trouvent empêchés de pouvoir se déplacer dans le sens transversal.

Les différents éléments 1 constituant le présent dispositif sont initialement reliés par un moyen de liaison provisoire. Dans l'exemple représenté aux figures 1 à 6, il s'agit de deux joncs 7 en matériau flexible qui sont engagés dans des rainures longitudinales 8 prévues sur la périphérie des éléments 1.

Ainsi les différents éléments 1 forment un ensemble d'un seul tenant qui peut être aisément engagé à l'intérieur du conduit transversal constitué par la réunion des charnons 4a et 4b des deux rangées d'agrafes de jonction. Ceci permet d'obtenir très facilement une mise en place correcte de chaque élément 1, de façon que ses parties décalées 6a et 6b soient bien placées en regard des charnons respectivement 4a et 4b des deux agrafes correspondantes situées en regard. Eventuellement le dispositif ainsi constitué peut comporter un élément terminal 1 pourvu d'une tête saillante 1h dont la venue en butée, contre le charnon de l'agrafe correspondante, détermine le positionnement correct de l'ensemble des différents autres éléments 1, à l'intérieur des charnons 4a et 4b.

Cependant, dès que le tapis transporteur correspondant est en service, il est amené à prendre une forme incurvée, telle que celle représentée à la figure 12 et ce, du fait de la disposition des rouleaux 9 servant de supports à celui-ci. Or, cet incurvement a pour effet de provoquer la rupture des joncs 7 servant jusque-là de moyen de liaison provisoire entre les différents éléments 1. Dans ces conditions ceux-ci sont désormais complètement indépendants les uns des autres. Etant donné que les agrafes 2a et 2b des deux rangées étaient déjà indépendantes les unes des autres, l'attache de raccordement, constituée par la combinaison de ces agrafes et du présent dispositif de liaison, ne constitue aucune gêne pour l'incurvement du tapis transporteur, dans le sens transversal. On obtient donc le même avantage qu'avec un axe de liaison consistant en un câble flexible constitué par des fils métalliques torsadés.

Par contre, la résistance mécanique du présent dispositif de liaison est considérablement accrue par rapport à celle d'un tel câble. Ceci est dû au fait que chacun des éléments constitutifs 1 de ce dispositif est un élément massif pouvant être fabriqué en un matériau de forte résistance mécanique. Il convient de noter que les flancs 20 des épaulements, formés par le décalage des parties 6a et 6b, sont inclinés (voir figure 6), de façon à assurer un recentrage de chacun des éléments 1 du présent dispositif de liaison par rapport aux charnons de chacune des agrafes, quand la jonction réalisée est soumise à un effort de traction lors de la mise en service du tapis transporteur correspondant.

Les figures 7 et 8 représentent deux autres formes de réalisation du dispositif selon l'invention. Dans le cas de la figure 7, l'élément de liaison 11 représenté est destiné à assurer la liaison de deux séries d'agrafes de jonction 12a et 12b dont l'une (12a) comporte un seul charnon 14a situé en son milieu et destiné à être placé entre deux charnons espacés 14b prévus sur l'agrafe 12b disposée en regard.

Dans le cas illustré à la figure 8, les éléments de liaison 21 du dispositif selon l'invention sont destinés à assurer chacun la liaison de trois charnons 24a ou 24b appartenant à deux agrafes 22a ou 22b, disposées en regard, et qui comportent chacune deux charnons. Dans un tel cas les agrafes de l'une et l'autre rangées sont décalées.

Mais, bien entendu, les éléments constitutifs du présent dispositif de liaison pourraient être adaptés au cas de tous autres types d'agrafes de jonction, notamment en fonction du nombre et de la répartition des charnons d'articulation de ces agrafes, sous réserve bien entendu, de laisser l'indépendance voulue entre les différentes agrafes d'une même rangée pour permettre l'incurvement ultérieur du tapis transporteur correspondant, dans le sens transversal. La figure 9 illustre une autre forme de réalisation dans laquelle le moyen provisoire de liaison des éléments 1b du dispositif correspondant est constitué par un fil flexible 10 sur lequel ces éléments sont enfilés. Ce fil possède une très faible résistance mécanique de façon à se rompre rapidement lorsque le tapis transporteur correspondant est en service, afin que les différents éléments 1b soient désormais indépendants les uns des autres, de même que dans la première forme de réalisation décrite.

A ce sujet, il convient de noter que la présence d'un canal dans chacun des éléments 1b, pour servir de passage au fil 10, n'est pas de nature à amoindrir de façon significative la résistance mécanique de ces éléments. En effet, le canal ainsi prévu présente une très faible section. Il n'y a donc aucun rapport réel avec les axes de liaison constitués par un câble en fils métalliques torsadés sur lequel sont enfilées des douilles métalliques. Du reste, dans le cas présent le fil 10 constitue un simple moyen de liaison provisoire destiné à disparaître dès la mise en service du tapis transporteur correspondant.

La figure 10 représente une autre forme de réalisation dans laquelle le moyen de liaison provisoire entre les différents éléments 1c du dispositif correspondant est constitué par une gaine 15 en matière flexible, à l'intérieur de laquelle ces éléments sont logés les uns à la suite des autres. Cette gaine est réalisée avec une très faible épaisseur et en un matériau tel qu'elle est amenée à se rompre dès la mise en service du tapis transporteur correspondant, afin que les éléments 1c du présent dispositif de liaison aient une indépendance complète les uns par rapport aux autres, de même que dans les formes de réalisation précédemment décrites.

La figure 11 représente une autre forme de réalisation dans laquelle la liaison provisoire des différents éléments 1d de ce dispositif est assurée par des tétons 16 prévus à l'une des extrémités de chacun d'eux et pourvus d'un renflement 17 constituant une rotule destinée à être engagée dans une cavité ménagée dans l'extrémité opposée de chaque élément. Ces tétons sont réalisés de manière à pouvoir se rompre dès la mise en service du tapis transporteur correspondant, soit sous l'effet de l'incurvement transversal de celui-ci, soit sous l'effet des tractions subies lors de la mise en tension de ce tapis. On obtient donc de la sorte le même résultat que dans les formes de réalisation décrites précédemment.

La figure 13 représente une forme particulière de réalisation du dispositif de liaison selon l'invention. Dans celle-ci le dispositif correspondant n'est pas constitué, sur toute sa longueur, par une série d'éléments identiques 1, 1a, 1b, 1c ou 1d de faible longueur. En effet, ce dispositif ne comporte que deux séries de tels éléments 1e et 1f qui sont localisées dans les zones A et B où le tapis transporteur correspondant sera amené à former un coude lors de son incurvement sur les rouleaux de support 9. Entre ces deux séries d'éléments 1e et 1f, le présent dispositif comporte un axe rigide 18 constitué par une tige de section circulaire de forte résistance mécanique. Ce dispositif comprend également deux autres axes similaires 19, situés de part et d'autre des deux séries d'éléments 1e et 1f.

Cette structure particulière permet l'incurvement voulu du tapis transporteur dans les zones où celui-ci est amené à former un coude lorsqu'il est en service. Dans les autres parties, il importe peu que la liaison des agrafes de jonction soit assurée par des axes rigides 18 et 19 puisque celles-ci ne sont pas amenées à former un coude ou à s'incurver lorsque le tapis transporteur est en service. Cependant la répartition des zones flexibles et rigides d'un tel dispositif de liaison pourrait être modifiée suivant les cas et applications.

Du reste, il va de soi que le dispositif de liaison selon l'invention n'est pas limité aux seuls exemples de réalisation qui ont été décrits précédemment. Par ailleurs, il faut noter que la présente invention a pour objet non seulement un dispositif de liaison, tel que décrit précédemment, mais également les attaches de raccordement pour tapis transporteur qui sont constituées par la combinaison de deux rangées d'agrafes de jonction et d'un dispositif de liaison tel que décrit ci-dessus.

**Revendications**

1. Dispositif destiné à assurer la liaison articulée des charnons de deux séries complémentaires d'agrafes de jonction (2a, 2b) fixées respectivement sur l'un et l'autre bords des parties à raccorder (3a, 3b) d'un tapis transporteur, caractérisé en ce que :
— ce dispositif est constitué par une série d'éléments indépendants (1, 1a, 1b, 1c, 1d) en forme générale de tronçons de tige de section circulaire, disposés les uns à la suite des autres, et dont chacun présente une longueur limitée correspondant au maximum à celle des charnons (4a et 4b ou 14a et 14b) de deux agrafes de jonction (2a et 2b ou 12a et 12b) situées en regard,
— ces éléments comportent des parties décalées (6a et 6b) correspondant chacune à la largeur d'un charnon (2a, 2b, 12a, 12b), de façon que ces éléments soient ainsi immobilisés dans le sens longitudinal après leur mise en place,
— et ces divers éléments sont initialement réunis les uns avec les autres par un moyen de liaison flexible (7, 10, 15, 16), mais provisoire, susceptible de se rompre lors de l'incurvement ultérieur du tapis transporteur correspondant.

2. Dispositif de liaison selon la revendication 1, caractérisé en ce que les éléments (1) constituant celui-ci présentent au moins une rainure longitudinale (8) sur leur paroi externe et le moyen de liaison provisoire de ces éléments consiste en un jonc longitudinal (7) engagé dans le canal formé par ces diverses rainures, ce jonc étant susceptible de se rompre aisément.

3. Dispositif de liaison selon la revendication 1, caractérisé en ce que le moyen de liaison provisoire des éléments constituant celui-ci consiste en un fil (10) sur lequel ces éléments sont enfilés et qui est susceptible de se rompre aisément sous l'effet d'un incurvement.

4. Dispositif de liaison selon la revendication 1, caractérisé en ce que le moyen de liaison provisoire des éléments constituant celui-ci consiste en une gaine (15) à l'intérieur de laquelle ces éléments sont logés, et qui est susceptible de se rompre aisément sous l'effet d'un incurvement.

5. Dispositif de liaison selon la revendication 1, caractérisé en ce que les éléments constituant celui-ci sont reliés les uns aux autres par des tétons de jonction (16) susceptibles de se rompre aisément lors de l'incurvement de l'ensemble.

6. Dispositif de liaison selon l'une des revendications précédentes, caractérisé en ce qu'il comprend deux séries distinctes d'éléments de liaison (1e et 1f), situées respectivement dans l'une et l'autre zones où il se produit un coude d'un tapis transporteur, lorsque celui-ci est en service, un axe rigide (18) de jonction étant disposé entre deux séries d'éléments et deux autres axes similaires (19) étant prévus de part et d'autre.

7. Attache pour le raccordement de deux parties (3a, 3b) d'un tapis transporteur, constituée par deux séries d'agrafes de jonction (2a, 2b) comportant des charnons imbriqués les uns dans les autres et reliés par un axe d'articulation ou similaire, enfilé dans ces charnons, caractérisée en ce que celui-ci est constitué par un dispositif de liaison selon l'une des revendications 1 à 6.

**Claims**

1. Device for providing an articulated coupling between the hinge-knuckles of two complementary series of belt-fasteners (2a, 2b) fixed respectively on each edge of the end portions of a conveyor belt to be joined together (3a, 3b), characterized in that :
— this device is constituted by a series of independent elements (1, 1a, 1b, 1c, 1d) in the general form of rod segments having a circular cross-section and placed one after another in succession, the length of each rod segment being of limited value corresponding at a maximum to the length of the hinge-knuckles (4a and 4b or 14a and 14b) of two belt-fasteners (2a and 2b or 12a and 12b) located in oppositely-facing relation,
— these elements have relatively displaced portions (6a and 6b) each corresponding to the width of one hinge-knuckle (2a, 2b, 12a, 12b) so as to ensure that these elements are thus stationarily fixed in the longitudinal direction after positioning,
— and the different elements are initially joined together by a flexible but temporary coupling means (7, 10, 15, 16) which is capable of shearing at the time of subsequent troughing of the corresponding conveyor belt.

2. Coupling device according to claim 1, characterized in that the elements (1) constituting this device are provided with at least one longitudinal groove (8) in their external wall and the means for temporary coupling of these elements consist of a longitudinal strip (7) engaged in the passageway formed by these different grooves, this strip being readily shearable.

3. Coupling device according to claim 1, characterized in that the means for temporary coupling of the elements constituting this latter consist of a wire (10) on which these elements are threaded and which is readily shearable under the action of an incurvation.

4. Coupling device according to claim 1, characterized in that the means for temporary coupling of the elements constituting this latter consist of a sheath (15) within which these elements are housed, and which is readily shearable under the action of incurvation.

5. Coupling device according to claim 1, characterized in that the elements constituting this latter are joined to each other by means of junction studs (16) which are readily shearable at the time of incurvation of the entire assembly.

6. Coupling device according to any one of the preceding claims, characterized in that it comprises two separate and distinct series of coupling elements (1e and 1f) located respectively in each elbowed zone of a conveyor belt when this latter is in service, a rigid coupling shaft (18) being disposed between two series of elements and two other similar shafts (19) being provided on each side.

7. Attachment system providing a hinged connection between two portions (3a, 3b) of a conveyor belt, constituted by two series of belt-fasteners (2a, 2b) comprising hinge-knuckles which are disposed in interfitting relation and joined together by means of a hinge-pin or like member engaged within these hinge-knuckles, characterized in that this latter is constituted by a coupling device according to one of claims 1 to 6.

**Patentansprüche**

1. Vorrichtung zu einer gelenkigen Verbindung von zwei ergänzenden Reihen von Verbindungshaken, welche auf dem einen bzw. dem anderen Rand der miteinander zu verbindenden Teile eines Förderbandes befestigt sind, dadurch gekennzeichnet, daß diese Vorrichtung aus einer Reihe von unabhängigen Elementen (1, 1a, 1b, 1c, 1d) in der allgemeinen Form von Stabteilen mit kreisrundem Querschnitt besteht, welche hintereinander angeordnet sind und deren jedes eine maximal der Breite der Scharnierteile (4a und 4b, oder 14a und 14b) zweier einander gegenüberliegender Verbindungshaken (2a und 2b oder 12a und 12b) entsprechende Länge besitzt,

— daß diese Elemente jeweils der Breite eines Scharnierteiles (2a, 2b, 12a, 12b) entsprechend versetzte Teile (6a und 6b) aufweist, sodaß die Elemente nach ihren Einsetzen in Längsrichtung fixiert sind,

— und daß diese verschiedenen Elemente anfangs durch ein biegsames jedoch provisorisches Organ (7, 10, 15, 16) miteinander verbunden sind, welches beim späteren Einwärtskrümmen des entsprechenden Förderbandes zerreißbar ist.

2. Vorrichtung nach Anspruch 1, dadurch gekennzeichnet, daß die sie bildenden Elemente (1) zumindest eine Längsnut (8) in ihrer Außenwand aufweisen und das provisorische Verbindungsorgan dieser Elemente aus einem in den durch die verschiedenen Längsnuten gebildeten Kanal eingeschobenen Stab (7) besteht, der leicht zerbrechlich ist.

3. Vorrichtung nach Anspruch 1, dadurch gekennzeichnet, daß das provisorische Verbindungsorgan der die Vorrichtung bildenden Elemente aus einem Faden (10) besteht, auf welchem die Elemente aufgefädelt sind und welcher unter der Wirkung einer Einwärtskrümmung leicht zerreißbar ist.

4. Vorrichtung nach Anspruch 1, dadurch gekennzeichnet, daß das provisorische Verbindungsorgan der die Vorrichtung bildenden Elemente aus einer Hülse (15) besteht, in deren Innerem die Elemente untergebracht sind und welche unter der Wirkung einer Einwärtskrümmung leicht zerreißbar ist.

5. Vorrichtung nach Anspruch 1, dadurch gekennzeichnet, daß die sie bildenden Elemente miteinander durch Verbindungszapfen (16) miteinander verbunden sind, welche bei einer Einwärtskrümmung des Ganzen leicht zerbrechbar sind.

6. Vorrichtung nach irgendeinem der vorangehenden Ansprüche, dadurch gekennzeichnet, daß sie zwei unterschiedliche Verbindungselemente (1e und 1f) besitzt, welche in der einen bzw. der anderen Zone angeordnet sind, in welcher während des Betriebes eines Förderbandes eine Krümmung entsteht, und daß eine starke Verbindungsachse (18) zwischen zwei Elementenreihen sowie zwei weitere gleiche Achsen (19) beiderseits derselben vorgesehen sind.

7. Verbindungsstück zum Aneinanderfügen von zwei Teilen (3a, 3b) eines Förderbandes, bestehend aus zwei Reihen von Verbindungshaken (2a, 2b), bestehend aus ineinander verzahnten Scharnierteilen, welche durch eine in dieselben eingeschobene Gelenkachse oder dgl. verbunden sind, dadurch gekennzeichnet, daß das Verbindungsstück durch eine Vorrichtung gemäß einem der Ansprüche 1 bis 6 gebildet wird.

EP 0 187 061 B1

Fig:1

Fig:2

Fig:3

Fig:4

Fig:6

Fig:7

## Fig:5

## Fig:8

Fig: 9

Fig: 10

Fig: 11

Fig: 12

Fig: 13